# EUROPEAN PATENT APPLICATION

(11) **EP 4 084 289 A1**
(43) Date of publication of application: **02.11.2022**
(21) Application number: 21744129.4
(22) Date of filing: 21.01.2021
(51) Int. Cl.: H02K 1/14, H02K 1/17, H02K 15/02, H02K 16/02, H02K 49/10

(54) **MAGNETIC GEARED DYNAMO-ELECTRIC MACHINE, AND METHOD FOR MANUFACTURING STATOR**

(30) Priority: 24.01.2020 JP 2020010231
(71) Applicant: Mitsubishi Heavy Industries, Ltd., Tokyo 100-8332 (JP)
(72) Inventor: SASAKI, Mikito, Tokyo 100-8332 (JP); MATSUSHITA, Takatoshi, Tokyo 100-8332 (JP)
(74) Representative: Studio Torta S.p.A.
(86) International application number: PCT/JP2021/001974
(87) International publication number: WO 2021/149753

(57) **Abstract**

A magnetic geared rotary electric machine is provided with: a casing; a stator including a stator core, a coil, and a plurality of stator magnets installed inside the stator core; a first rotor including a plurality of pole pieces provided inside the stator; and a second rotor including a rotor core provided inside the first rotor and a plurality of rotor magnets provided in the rotor core, wherein the stator core includes a back yoke and a plurality of teeth protruding radially inward from the back yoke and provided at intervals in the circumferential direction, a plurality of the stator magnets are attached to radially inner end portions of the teeth in the circumferential direction, and the stator magnets are attached to the stator core so that a first portion of the tooth to which the stator magnets are attached is allowed to separate from a second portion of the stator core.

## Description

### Technical Field

The present disclosure relates to a magnetic geared rotary electric machine and a stator manufacturing method.

Priority is claimed on Japanese Patent Application No. 2020-010231, filed January 24, 2020, the content of which is incorporated herein by reference.

### Background Art

Patent Document 1 below discloses a magnetic geared rotary electric machine in which a low-speed rotor (first rotor), a high-speed rotor (second rotor), and a stator are coaxially rotatable relative to each other.

When the magnetic geared rotary electric machine is used as, for example, a motor, the low-speed rotor which is an output shaft rotates at a predetermined reduction ratio due to a harmonic magnetic flux by rotating the high-speed rotor by an electromotive force of a coil provided in the stator.

In the magnetic geared rotary electric machine, the stator includes a stator core and a plurality of stator magnets provided on the inner peripheral side of the stator core. Patent Document 2 below discloses a specific example of a stator core used in a general electric motor. This stator core includes an annular back yoke and a plurality of teeth extending from the back yoke to the inner peripheral side. Further, Patent Document 2 below shows a configuration in which the stator core is divided into a plurality of portions. More specifically, this stator core is formed by dividing the back yoke in the circumferential direction for each of the teeth.

### Citation List

### Patent Document(s)

Patent Document 1: Japanese Unexamined Patent Application, First Publication No. 2014-163431
Patent Document 2: Japanese Patent No. 5450189

### Summary of Invention

### Technical Problem

In the magnetic geared rotary electric machine, the stator may have a large diameter of about several meters as an example. When the back yoke is divided for each of the teeth as described above, it becomes difficult to maintain the roundness of the back yoke during assembly since there is a slight gap in a divided surface. Further, in the magnetic geared rotary electric machine, a plurality of magnetic materials may be magnetized (post-magnetized) after the plurality of magnetic materials are arranged in the teeth. Therefore, it becomes useful to operate a large magnetizing device capable of accommodating the entire stator with a large amount of power.

The present disclosure has been made to solve the above-described problems and an object thereof is to provide a magnetic geared rotary electric machine including a more easily manufactured stator, and to provide a stator manufacturing method of that.

### Solution to Problem

In order to solve the above-described problems, a magnetic geared rotary electric machine according to the present disclosure includes: a casing; a stator which includes a stator core fixed to the casing and hformed in an annular shape centered on an axis, a coil installed inside a slot of the stator core, and a plurality of stator magnets installed inside the stator core at intervals in a circumferential direction of the axis; a first rotor which includes a plurality of pole pieces provided inside the stator at intervals in a circumferential direction of the axis; and a second rotor which includes a rotor core provided inside the first rotor and a plurality of rotor magnets provided in the rotor core at intervals in a circumferential direction, wherein the stator core includes a back yoke which surrounds the axis and a plurality of teeth which protrude radially inward from the back yoke and are provided at intervals in the circumferential direction, wherein the plurality of stator magnets are attached to radially inner end portions of the teeth in the circumferential direction, and wherein the stator magnets is attached to the stator core so that a first portion of the tooth to which the stator magnet are attached is allowed to separate from a second portion of the stator core.

A stator manufacturing method of the present disclosure is a method of manufacturing a stator including a stator core being provided with a back yoke surrounding an axis and a plurality of teeth protruding radially inward from the back yoke and formed on the back yoke at intervals in a circumferential direction of the axis and a plurality of stator magnets which are provided inside the tooth at intervals in the circumferential direction, the stator magnets being attached to the stator core so that a first portion of the tooth to which the stator magnets are attached is allowed to separate from a second portion of the stator core, the method including: preparing the first portion; preparing the second portion; fixing a magnetic material to the first portion; forming the stator magnet by magnetizing the magnetic material; and joining the first portion and the second portion to each other.

### Advantageous Effects of Invention

According to the present disclosure, it is possible to provide a magnetic geared rotary electric machine including a more easily manufactured stator and to provide a stator manufacturing method of that.

### Brief Description of Drawings

FIG. 1 is a cross-sectional view showing a configuration of a magnetic geared rotary electric machine according to an embodiment of the present disclosure.
FIG. 2 is a cross-sectional view taken along a line II-II of FIG. 1.
FIG. 3 is a plan view showing a configuration of a stator core according to the embodiment of the present disclosure.
FIG. 4 is a process diagram showing each step of a stator manufacturing method according to the embodiment of the present disclosure.
FIG. 5 is a schematic diagram showing a configuration of a magnetizing device used in the stator manufacturing method according to the embodiment of the present disclosure.
FIG. 6 is a plan view showing a modified example of the stator core according to the embodiment of the present disclosure.

### Description of Embodiments

### First embodiment

### (Configuration of magnetic geared rotary electric machine)

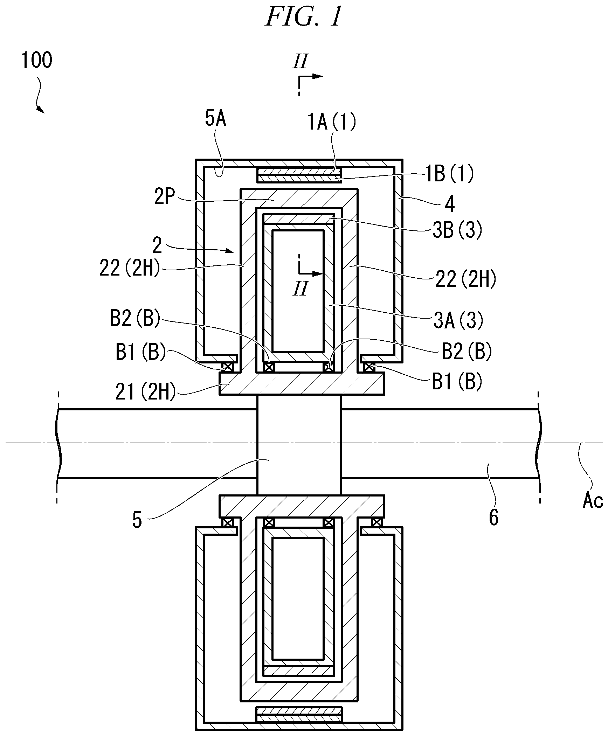

Hereinafter, a magnetic geared rotary electric machine 100 according to a first embodiment of the present disclosure will be described with reference to FIGs. 1 to 5. As shown in FIGs. 1 to 3, the magnetic geared rotary electric machine 100 includes a stator 1, a first rotor 2, a second rotor 3, a casing 4, and a bearing B. The magnetic geared rotary electric machine 100 is attached to a rotating shaft 6 extending in an axis Ac. When electric power is supplied from the outside, the magnetic geared rotary electric machine functions as an electric motor by rotating the first rotor 2 and the second rotor 3 around the axis Ac. On the other hand, when a rotational force (torque) is applied to the rotating shaft 6 from the outside, the magnetic geared rotary electric machine functions as a generator by an induced electromotive force accompanying the rotation of the first rotor 2 and the second rotor 3.

### (Configurations of casing and stator)

The casing 4 is formed in an annular shape centered on the axis Ac. A space is formed inside the casing 4. The stator 1 is provided on a surface (casing inner peripheral surface 5A) facing the inside of the radial direction with respect to the axis Ac in the inner surface of the casing 4.

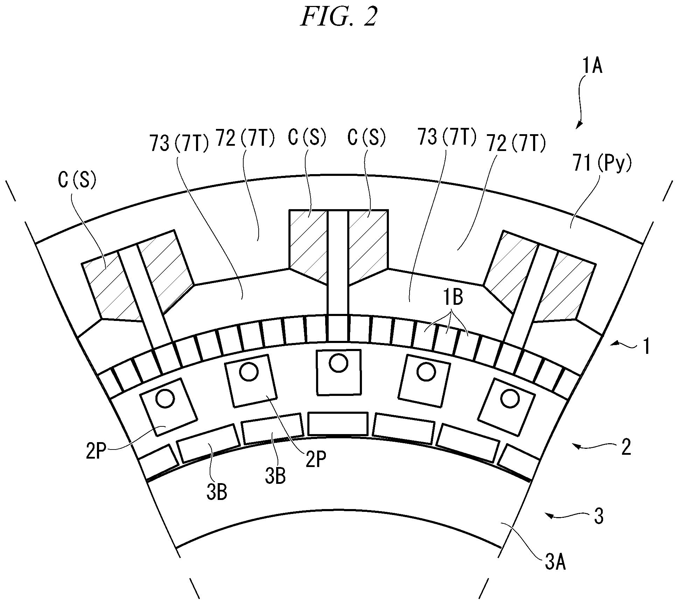

As shown in FIG. 2, the stator 1 includes a stator core 1A, a plurality of coils C, and a plurality of stator magnets 1B. The stator core 1A includes a back yoke 71 which is formed in an annular shape centered on the axis Ac and a plurality of teeth 7T which protrude radially inward from the back yoke 71 and are arranged at intervals in the circumferential direction. Each of the teeth 7T include a tooth body 72 which extends radially inward from the back yoke 71 and a tooth top end portion 73 which is integrally formed with the radially inner end portion of the tooth body 72. The tooth top end portion 73 projects toward both circumferential sides. The back yoke 71 is divided in the circumferential direction for each of the plurality of (three as an example) teeth 7T. In other words, the back yoke 71 is configured by joining a plurality of yoke divided bodies Py in the circumferential direction. Additionally, the back yoke 71 can be configured as an integral annular member.

The coils C are attached to the tooth bodies 72. The coil C is formed by winding a copper wire or the like around the tooth bodies 72. An area which is surrounded by the back yoke 71, the pair of adjacent tooth bodies 72, and the tooth top end portion 73 is a slot S for accommodating the coil C.

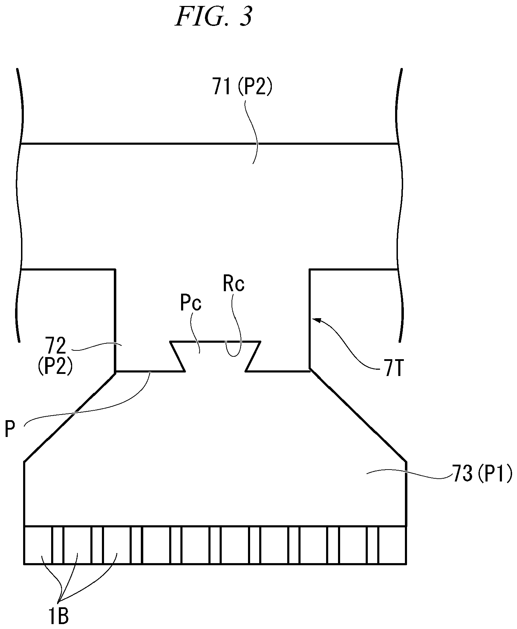

The tooth top end portion 73 is attached to the tooth body 72 so as to be allowed to separate from the tooth body 72. More specifically, as shown in FIG. 3, the inner peripheral end portion of the tooth body 72 is provided with an engagement female portion Rc which is recessed radially outward. The outer peripheral end portion of the tooth top end portion 73 is provided with an engagement male portion Pc which protrudes radially outward. When the engagement male portion Pc is engaged with the engagement female portion Rc, the tooth body 72 and the tooth top end portion 73 are joined to each other.

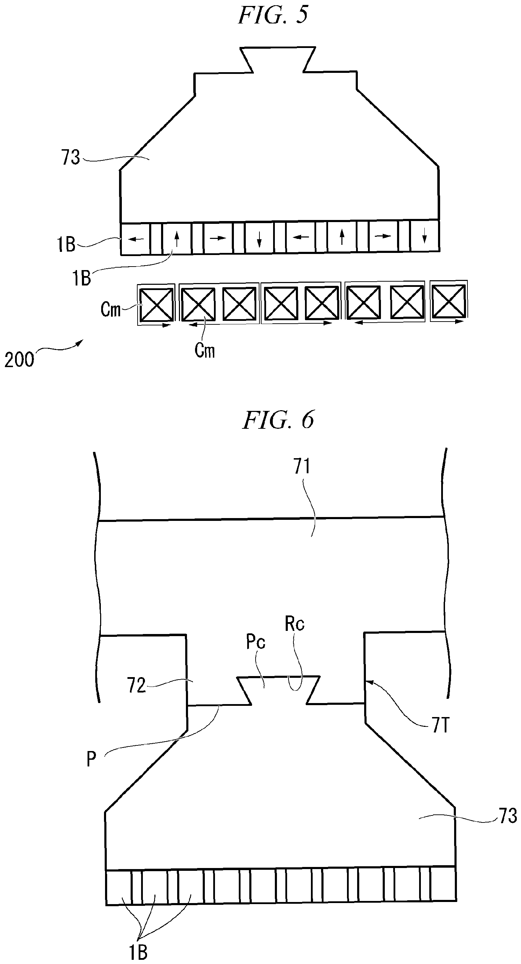

As shown in FIG. 2, the plurality of stator magnets 1B are arranged on the radially inner surface of the tooth top end portion 73 to be adjacent to each other in the circumferential direction. The stator magnet 1B is a permanent magnet such as a ferrite magnet or a neodymium magnet. The poles (magnetization direction) facing the inner peripheral side are different between the stator magnets 1B adjacent to each other. More specifically, these stator magnets 1B are arranged according to a Halbach magnet arrangement. As shown in FIG. 5, in the Halbach magnet arrangement, the magnetization direction changes in order from one side to the other side in the circumferential direction in four clockwise directions. The arrow attached to the stator magnet 1B in FIG. 5 indicates the magnetization direction.

### (Configuration of first rotor)

As shown in FIG. 1, the first rotor 2 is provided inside the stator 1. The first rotor 2 includes a disk portion 5, a first rotor body 2H, and a plurality of pole pieces 2P. The disk portion 5 is formed in a disk shape centered on the axis Ac and is attached to the rotating shaft 6. The first rotor body 2H is attached to the outer peripheral side of the disk portion 5. The first rotor body 2H includes a cylindrical portion 21 which has a cylindrical shape centered on the axis Ac and a pair of support portions 22 which projects radially outward from the outer peripheral surface of the cylindrical portion 21. The cylindrical portion 21 is supported on the inner peripheral surface of the casing 4 through the bearing B (outer bearing B1) to be described later. The plurality of pole pieces 2P are provided on the radially outer end edges of the pair of support portions 22. The pole piece 2P is a magnetic material and generates a high frequency of magnetic flux by interaction with the magnetic force of the stator magnet 1B and a rotor magnet 3B described later. As shown in FIG. 2, the plurality of pole pieces 2P are provided at intervals in the circumferential direction.

### (Configuration of second rotor)

As shown in FIG. 1, the second rotor 3 is provided between the pair of support portions 22 in the first rotor body 2H. The second rotor 3 includes a rotor core 3A and a rotor magnet 3B. The rotor core 3A is formed in an annular shape centered on the axis Ac. The inner peripheral surface of the rotor core 3A is rotatably supported by the outer peripheral surface of the cylindrical portion 21 of the first rotor body 2H through the bearing B (inner bearing B2). As shown in FIG. 2, the plurality of rotor magnets 3B are arranged on the outer peripheral surface of the rotor core 3A in the circumferential direction. The rotor magnet 3B faces the pole piece 2P from the inner peripheral side.

### (Stator manufacturing method)

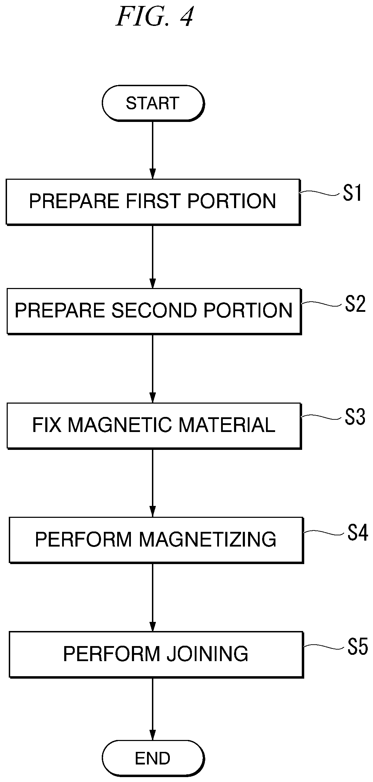

Next, a method of manufacturing the stator 1 will be described with reference to FIGs. 4 and 5. In the following description, the tooth 7T is separated into the tooth top end portion 73 (as a first portion P1 mentioned below) to which the stator magnets 1B are attached and the other portion (as a second portion P2 mentioned below) including the tooth body 72, along with the first portion P1 is detachably attached to the second portion. top end portion 73A method of manufacturing the stator 1 includes a step S1 of preparing the first portion P1, a step S2 of preparing the second portion P2, a step S3 of fixing a magnetic material to the first portion P1, a step S4 of forming the stator magnet 1B by magnetizing the magnetic material, and a step S5 of joining the first portion P1 to the second portion P2.

In the step S1 of preparing the first portion P1, the tooth top end portion 73 is prepared as the first portion P1. In the step S2 of preparing the second portion P2, the other portion of the stator core 1A including the tooth body 72 is prepared as the second portion P2. Next, a plurality of magnetic materials are fixed to the tooth top end portion 73 (step S3). Next, the tooth top end portion 73 to which the magnetic material is fixed is used as one unit and the magnetic material is magnetized by a magnetizing device 200 (step S4). Specifically, as shown in FIG. 5, the magnetizing device 200 includes a plurality of magnetizing coils Cm. In the example of FIG. 5, a plurality of (for example, four) sets formed by a pair of magnetizing coils Cm having different magnetic flux directions are arranged in the circumferential direction. By energizing these magnetizing coils Cm, the magnetizing direction according to the above-described Halbach magnet arrangement is given to the magnetic material, and the stator magnet 1B is formed. Then, the tooth top end portion 73 (first portion PI) to which the stator magnet 1B is attached is joined to the second portion P2 (step S5). As described above, the entire process of the method of manufacturing the stator 1 is completed.

### (Operation and effect)

Next, an operation of the magnetic geared rotary electric machine 100 will be described. When the magnetic geared rotary electric machine 100 is used as an electric motor, electric power is first supplied to the coil C from the outside. Accordingly, the coil C is excited. Due to the magnetic force of the coil C, the second rotor 3 rotates around the axis Ac. Further, when the second rotor 3 rotates, the first rotor 2 rotates. The rotation speed of the first rotor 2 is decelerated under a reduction ratio based on the number of poles Ph of the first rotor 2 and the number of pole pairs Ns of the second rotor 3. Specifically, the reduction ratio G is G=Ph/Ns.

On the other hand, when the magnetic geared rotary electric machine 100 is used as a generator, a rotational force (torque) around the axis Ac is applied to the rotating shaft 6. Accordingly, the first rotor 2 and the second rotor 3 rotate by the rotation of the rotating shaft 6. As the first rotor 2 and the second rotor 3 rotate, an induced electromotive force is generated in the coil C. By taking out this electric power to the outside, the magnetic geared rotary electric machine 100 can be used as a generator.

Incidentally, in the magnetic geared rotary electric machine 100, the stator 1 may have a large diameter of about several m. For example, unlike the above-described embodiment, since a slight gap is generated in the divided surface when the back yoke 71 is divided for each of the teeth 7T, it will be difficult to maintain the roundness of the back yoke 71 during assembly. Further, in the magnetic geared rotary electric machine 100, the plurality of magnetic materials are magnetized (post-magnetized) after the magnetic materials are arranged in the tooth 7T. Therefore, it becomes necessary to operate the large-sized magnetizing device 200 capable of accommodating the entire stator 1 with a large amount of power.

However, according to the above-described configuration, even when the magnetic material is magnetized later to form the stator magnet 1B, a portion to which the stator magnets 1B (magnetic material) are attached in the tooth 7T may be magnetized as one unit. Accordingly, the dimensional body size of the magnetizing device 200 or the required power can be reduced. As a result, it is possible to more easily manufacture the magnetic geared rotary electric machine 100 at low cost.
Further, since it is not necessary to divide the back yoke 71 by the unit of the tooth 7T, it is possible to decrease the number of divided surfaces. Accordingly, it is possible to more easily ensure the roundness during assembly. Further, when there are many divided surfaces, noise may be generated due to the slight gaps generated in the divided surfaces. However, according to the above-described configuration, since the number of divided surfaces decreases, it is possible to suppress the occurrence of such noise.

According to the above-described configuration, since the tooth top end portion 73 is attachable to and detachable from the tooth body 72, only the tooth top end portion 73 may be accommodated in the magnetizing device 200 when performing the magnetization. Accordingly, the dimension or size of the magnetizing device 200 or the required power can be further reduced.

Further, according to the above-described configuration, the stator magnets 1B are arranged in the Halbach magnet arrangement. Accordingly, it is possible to strengthen a specific directional component of the magnetic field strength generated by the stator magnet 1B. Thus, it is possible to enhance the magnetic performance as the stator magnet 1B and to improve the torque of the magnetic geared rotary electric machine 100.

Further, according to the method of manufacturing the stator 1, when the magnetic material is magnetized to form the stator magnet 1B, a portion (first portion PI) to which the stator magnets 1B (magnetic material) are attached in the tooth 7T may be magnetized as one unit. Accordingly, it is possible to reduce the dimension or size of the magnetizing device 200 or the needed power. As a result, it is possible to more easily manufacture the magnetic geared rotary electric machine 100 at low cost. Further, since it is not necessary to divide the back yoke 71 by the unit of the tooth 7T, it is possible to decrease the number of divided surfaces. Accordingly, it is possible to more easily ensure the roundness during assembly.

### (Other embodiments)

Although the embodiment of the present disclosure has been described in detail with reference to the drawings, the specific configuration is not limited to this embodiment and includes design changes and the like within a range not deviating from the gist of the present disclosure. For example, in the above-described embodiment, a configuration has been described in which the tooth 7T is divided into the tooth top end portion 73 and the tooth body 72. However, as shown in FIG. 6, a configuration can be adopted in which the tooth 7T is divided at the middle position in the radial direction of the tooth body 72. In other words, in the example of the same drawing, the tooth 7T is attachably and detachably divided into a portion including the tooth top end portion 73 and a portion on the side of the back yoke 71.

According to the above-described configuration, since a portion on the side of the tooth top end portion 73 is attachable to and detachable from a portion on the side of the back yoke 71, only the portion on the side of the tooth top end portion 73 may be accommodated in the magnetizing device 200 when performing the magnetization. Accordingly, it is possible to further reduce the dimension or size of the magnetizing device 200 or the needed power.

### Appendix

The magnetic geared rotary electric machine 100 and the method of manufacturing the stator 1 described in each embodiment can be summarized as follows, for example.
(1) The magnetic geared rotary electric machine 100 according to a first aspect includes: the casing 4; the stator 1 which includes the stator core 1A fixed to the casing 4 and formed in an annular shape centered on the axis Ac, the coil C installed inside the slot S of the stator core 1A, and the plurality of stator magnets 1B installed inside the stator core 1A at intervals in the circumferential direction; the first rotor 2 which includes the plurality of pole pieces 2P provided inside the stator 1 at intervals in the circumferential direction of the axis Ac; and the second rotor 3 which includes the rotor core 3A provided inside the first rotor 2 and the plurality of rotor magnets 3B provided in the rotor core 3A at intervals in the circumferential direction, wherein the stator core 1A includes the back yoke 71 which surrounds the axis Ac and the plurality of teeth 7T which protrude radially inward from the back yoke 71 and are provided at intervals in the circumferential direction, wherein the plurality of stator magnets 1B are attached to the radially inner end portions of the teeth 7T in the circumferential direction, and wherein the stator magnets 1B are attached to the stator core 1A so that a first portion of the tooth 7T to which the stator magnets 1B are attached is allowed to separate from a second portion of the stator core 1A.
   According to the above-described configuration, even when the magnetic material is magnetized to form the stator magnet 1B, a portion to which the stator magnets 1B (magnetic material) are attached in the tooth 7T may be magnetized as one unit. Accordingly, the dimension and size of the magnetizing device 200 or the required power can be reduced. As a result, it is possible to more easily manufacture the magnetic geared rotary electric machine 100 at low cost. Further, since it is not necessary to divide the back yoke 71 by the unit of the tooth 7T, it is possible to decrease the number of divided surfaces. Accordingly, it is possible to more easily ensure the roundness during assembly. Further, when there are many divided surfaces, noise may be generated due to the slight gaps generated in the divided surfaces. However, according to the above-described configuration, since the number of divided surfaces decreases, it is possible to suppress the occurrence of such noise.
(2) In the magnetic geared rotary electric machine 100 according to a second aspect, the tooth 7T includes the tooth top end portion 73 corresponding to the first portion to which the stator magnet 1B is attached and the tooth body 72 which is formed on the back yoke 71 so as to be attached to the tooth top end portion 73 and the tooth top end portion 73 is detachable from the tooth body 72.
   According to the above-described configuration, since the tooth top end portion 73 is attachable to and detachable from the tooth body 72, only the tooth top end portion 73 may be accommodated in the magnetizing device 200 when performing the magnetization. Accordingly, the dimension or size of the magnetizing device 200 or the required power can be further reduced.
(3) In the magnetic geared rotary electric machine 100 according to a third aspect, the tooth 7T include the tooth top end portion 73 corresponding to the first portion to which the stator magnet 1B is attached and the tooth body 72 which is formed on the back yoke so as to be attached to the tooth top end portion 73 and the tooth body 72top end portion 73includes the first part which is close to the tooth top end portion 73 and the second part which is close to the back yoke 71, and wherein the first part is detachably attached to the second part.
   According to the above-described configuration, since a portion on the side of the tooth top end portion 73 is attachable to and detachable from a portion on the side of the back yoke 71, only the portion on the side of the tooth top end portion 73 may be accommodated in the magnetizing device 200 when performing the magnetization. Accordingly, it is possible to further reduce the dimension or size of the magnetizing device 200 or the required power.
(4) In the magnetic geared rotary electric machine 100 according to a fourth aspect, the plurality of stator magnets 1B are arranged in a Halbach magnet arrangement.
   According to the above-described configuration, the stator magnet 1B is arranged in a Halbach magnet arrangement. Accordingly, it is possible to strengthen a specific directional component of the magnetic field strength generated by the stator magnet 1B. Thus, it is possible to enhance the magnetic performance as the stator magnet 1B and to improve the torque of the magnetic geared rotary electric machine 100.
(5) A method of manufacturing the stator 1 according to a fifth aspect is a method of manufacturing the stator 1, the stator including the stator core 1A being provided with the back yoke 71 surrounding the axis Ac and the plurality of teeth 7T protruding radially inward from the back yoke 71 and formed on the back yoke 71 at intervals in the circumferential direction of the axis Ac and the plurality of stator magnets 1B provided inside the tooth 7T at intervals in the circumferential direction, the stator magnets 1B being attached to the stator core 1A so that the first portion of the tooth 7T to which the stator magnets 1B are attached is allowed to separate from the second portion of the stator core 1A, the method including: the step S1 of preparing the first portion P1; the step S2 of preparing the second portion P2; the step S3 of fixing the magnetic material to the first portion P1; the step S4 of forming the stator magnet 1B by magnetizing the magnetic material; and the step S5 of joining the first portion P1 to the second portion P2.

According to the above-described method, when the magnetic material is magnetized to form the stator magnet 1B, a portion (first portion P1) to which the stator magnets 1B (magnetic material) are attached in the tooth 7T may be magnetized as one unit. Accordingly, it is possible to reduce the dimension or size of the magnetizing device 200 or the required power. As a result, it is possible to more easily manufacture the magnetic geared rotary electric machine 100 at low cost. Further, since it is not necessary to divide the back yoke 71 by the unit of the tooth 7T, it is possible to decrease the number of divided surfaces. Accordingly, it is possible to more easily ensure the roundness during assembly.

### Industrial Applicability

According to the present disclosure, it is possible to provide a magnetic geared rotary electric machine including a more easily manufactured stator and a stator manufacturing method.

### Reference Signs List

100 Magnetic geared rotary electric machine
1 Stator
1A Stator core
1B Stator magnet
2 First rotor
21 Cylindrical portion
22 Support portion
2H First rotor body
2P Pole piece
3 Second rotor
3A Rotor core
3B Rotor magnet
4 Casing
5 Disk portion
5A Casing inner peripheral surface
6 Rotating shaft
71 Back yoke
72 Tooth body
73 Tooth top end portion
200 Magnetizing device
Ac Axis
B Bearing
B1 Outer bearing
B2 Inner bearing
C Coil
Cm Magnetizing coil
PI First portion
P2 Second portion
Pc Engagement male portion
Py Yoke divided body
Rc Engagement female portion
S Slot

## Claims

1. A magnetic geared rotary electric machine comprising:
a casing;
a stator including a stator core fixed to the casing and formed in an annular shape centered on an axis, a coil installed inside a slot of the stator core, and a plurality of stator magnets installed inside the stator core at intervals in a circumferential direction of the axis;
a first rotor including a plurality of pole pieces provided inside the stator at intervals in a circumferential direction of the axis; and
a second rotor including a rotor core provided inside the first rotor and a plurality of rotor magnets provided in the rotor core at intervals in the circumferential direction,
wherein the stator core includes a back yoke surrounding the axis and a plurality of teeth which protrude radially inward from the back yoke and are provided at intervals in the circumferential direction,
wherein the plurality of stator magnets are attached to radially inner end portions of the teeth in the circumferential direction, and
wherein the stator magnets is attached to the stator core so that a first portion of the tooth to which the stator magnet are attached is allowed to separate from a second portion of the stator core.

2. The magnetic geared rotary electric machine according to claim 1,
wherein the tooth includes a tooth top end portion corresponding to the first portion to which the stator magnet is attached and a tooth body which is formed on the back yoke so as to be attached to the tooth top end portion, and
wherein the tooth top end portion is detachable from the tooth body.

3. The magnetic geared rotary electric machine according to claim 1,
wherein the tooth includes a tooth top end portion corresponding to the first portion to which the stator magnet is attached and a tooth body which is formed on the back yoke so as to be attached to the tooth top end portion, and
wherein the tooth body includes a first part which is close to the tooth top end portion and a second part which is close to the back yoke, and wherein the first part is detachably attached to the second part.

4. The magnetic geared rotary electric machine according to any one of claims 1 to 3,
wherein the plurality of stator magnets are arranged in a Halbach magnet arrangement.

5. A method of manufacturing a stator, the stator including a stator core being provided with a back yoke surrounding an axis and a plurality of teeth protruding radially inward from the back yoke and formed on the back yoke at intervals in a circumferential direction of the axis and a plurality of stator magnets which are provided inside the tooth at intervals in the circumferential direction, the stator magnets being attached to the stator core so that a first portion of the tooth to which the stator magnets are attached is allowed to separate from a second portion of the stator core, the method comprising:
preparing the first portion;
preparing the second portion;
fixing a magnetic material to the first portion;
forming the stator magnet by magnetizing the magnetic material; and
joining the first portion and the second portion to each other.
